# EUROPÄISCHE PATENTSCHRIFT

(11) **EP 3 046 651 B1**
(45) Veröffentlichungstag und Bekanntmachung des Hinweises auf die Patenterteilung: **06.06.2018**
(21) Anmeldenummer: 14766977.4
(22) Anmeldetag: 16.09.2014
(51) Int. Cl.: B01D 53/14, B01D 53/50, B01D 53/62

(54) **VERFAHREN UND SYSTEM ZUR GASWÄSCHE VON AEROSOLHALTIGEN PROZESSGASEN**
METHOD AND SYSTEM FOR GAS SCRUBBING OF AEROSOL-CONTAINING PROCESS GASES
PROCÉDÉ ET SYSTÈME D'ÉPURATION DE GAZ DE PROCESSUS CONTENANT DES AÉROSOLS

(30) Priorität: 16.09.2013 DE 102013015280
(43) Veröffentlichungstag der Anmeldung: 27.07.2016
(73) Patentinhaber: RWE Power AG, 45128 Essen (DE)
(72) Erfinder: GINSBERG, Tobias, 40591 Düsseldorf (DE); MOSER, Peter, 50859 Köln (DE); SCHMIDT, Sandra, 42389 Wuppertal (DE); STAHL, Knut, 59071 Hamm (DE); WALLUS, Sarah, 45478 Mühlheim an der Ruhr (DE)
(74) Vertreter: Richly Ritschel
(86) Internationale Anmeldenummer: PCT/EP2014/069660
(87) Internationale Veröffentlichungsnummer: WO 2015/036603

(56) Entgegenhaltungen:
- EP-A1- 2 578 297
- US-A1- 2011 052 453
- US-A1- 2011 076 216
- US-B1- 8 486 357

## Beschreibung

Die Erfindung betrifft ein Verfahren zur Gaswäsche von aerosolhaltigen Prozessgasen unter Verwendung eines aminhaltigen Lösungsmittels als Waschmittel, welches in einer Absorberkolonne mit dem Prozessgas in Kontakt gebracht wird und welches in einer Desorberkolonne regeneriert und nach Abkühlung der Absorberkolonne wieder zugeführt wird.

Solche Verfahren zur Entfernung sauerer Gase aus Prozessgasen mittels aminhaltigen Lösungsmitteln sind insbesondere in der chemischen und petrochemischen Industrie sowie der Gaswirtschaft großtechnisch erprobt. Diese Verfahren haben in den letzten Jahren insbesondere für den Einsatz bei fossil gefeuerten Kraftwerken oder in der Stahl- und Zementindustrie mit CCS (Carbondioxid Capture and Storage) Bedeutung erlangt. Ein breiterer Einsatz der Kohlendioxidabtrenntechnik insbesondere bei Kraftwerken, die mit fossilen Brennstoffen betrieben werden, macht es erforderlich, Maßnahmen zur Reduzierung von Emissionen aus den Abtrennanlagen zu ergreifen. Diese Maßnahmen sind insbesondere bei großen Prozessgasströmen verhältnismäßig relevant. Beispielsweise beträgt der Rauchgasstrom eines großen Kraftwerksblocks zwischen 2 bis 4 Millionen m³/h. Maßnahmen zur Verringerung von Emissionen aus den Abtrennanlagen dienen sowohl dem Umweltschutz und der Genehmigungsfähigkeit der betreffenden Anlagen als auch der Senkung der Betriebskosten der CO₂-Abtrennung.

Im Stand der Technik ist grundsätzlich das Problem bekannt, dass am Kopf von Absorberkolonnen ein nennenswerter Waschmittelverlust gasförmig und in Form eines Waschmittelnebelaustrags stattfindet. Bei einem typischen Aminwäscheprozess wird Prozessgas zunächst in einer Feinwäschekolonne konditioniert, um die optimale Gastemperatur für den Aminwäscheprozess einzustellen und durch Zugabe von Additiven störende Spurstoffe auszuwaschen. Sodann wird in einer Waschkolonne bzw. Absorberkolonne die betreffende sauere Gaskomponente im Prozessgas, beispielsweise CO₂, bei niedriger Temperatur mit einer wässrigen Aminlösung, beispielsweise mit einer Mischung aus Wasser mit Monoethanolamin (MEA), ausgewaschen. Nachdem das CO₂-beladene Waschmittel in einem Gegenstromwärmetauscher durch CO₂-armes Waschmittel vorgewärmt wurde, wird dieses in eine Desorberkolonne (auch Stripper oder Regenerierkolonne genannt) eingeleitet. Dort wird das CO₂ durch Erwärmung des Waschmittels gasförmig freigesetzt. Nach Abkühlung im Gegenstromwärmetauscher wird das CO₂-arme Waschmittel wieder in die Absorberkolonne eingeleitet.

Ein solches Verfahren ist beispielsweise aus der EP 2 131 945 B1 bekannt, auf die hier vollinhaltlich, auch zum Zwecke der Offenbarung, Bezug genommen wird. Zur Minimierung der Emissionen an Aminen und flüchtigen Zersetzungsprodukten aus dem Waschmittel verfügt die Absorberkolonne über eine Wasserwäsche am Kopf des Absorbers, in der durch direkten Kontakt von gekühltem Umlaufwasser mit dem CO₂-armen Prozessgas das Amin und andere organische Spurstoffe aus der Gasphase in die flüssige Phase übergehen, wodurch die Konzentration des Amins und andere organische Spurstoffe in der Gasphase herabgesetzt und so die Emissionen gesenkt werden. Je nach Prozess und Amineigenschaften kann eine weitere Nachwäschestufe vorgesehen sein, in der dem Waschwasser eine Komponente zugesetzt werden kann, die mit dem Amin chemisch reagiert. Durch diese Maßnahme kann das Emissionsniveau für Amine auf relativ niedrige, sich aus der Gleichgewichtsthermodynamik der chemischen Reaktion ergebende Konzentrationen im CO₂-armen Prozessgas abgesenkt werden, und zwar durch Reduzierung des Dampfdrucks des Amins aufgrund dessen Reaktion mit dem zugegebenen Reaktionspartner.

Untersuchungen an Forschungsanlagen haben jedoch gezeigt, dass die Emissionskonzentrationen tatsächlich um 1 bis 2 Größenordnungen über den mittels Gleichgewichtsthermodynamik und Dampfdruck zu erwarteten Werten liegen. Ursache dafür scheint zu sein, dass der Mechanismus des Waschmittelaustrags zum überwiegenden Teil auf der Emission von Aerosolpartikeln beruht, die mit Aminen und organischen Spurstoffen aus dem Waschmittel beladen sind.

Die zuvor beschriebene Problematik wird bereits in der WO 2013/004731 A1 diskutiert. In dieser Anmeldung wird davon ausgegangen, dass der Waschmittelaustrag im Wesentlichen durch ultrafeine Feststoffpartikel in der Flugasche von Rauchgas/Prozessgas hervorgerufen wird, die als Nebelbildner im Prozessgas bzw. als Kondensationskeime wirken. Die Nebelbildung wird auch dem Umstand zugeschrieben, dass das gestrippte/regenerierte und abgekühlte Waschmittel mit einer verhältnismäßig hohen Temperaturdifferenz zum angereicherten Waschmittel dem Absorber wieder zugeführt wird, wodurch eine schlagartige Abkühlung der gesättigten Gasmischung und eine damit einhergehende Nebelbildung bewirkt wird. Dementsprechend wird in der WO 2013/004731 A1 zur Lösung der Problematik vorgeschlagen, die Temperaturdifferenz zwischen regeneriertem Waschmittel und angereichertem Waschmittel auf < 5°C zu begrenzen, um so eine Waschmittelnebelbildung zu unterdrücken.

Zur Lösung der zuvor geschilderten Problematik wird ein anderes Verfahren in der EP 2 578 297 A1 vorgeschlagen. In dieser Druckschrift wird die Nebelbildung den Aerosole erzeugenden gasförmigen Bestandteilen des Prozessgases wie beispielsweise SO₃, NHO₃, HCL sowie Wasserdampf in der Gasphase zugeschrieben. Bei einer CO₂-Wäsche, die einer Rauchgasentschwefelung eines Dampferzeuges nachgeschaltet ist, wird daher durch Abkühlung des Prozessgases in einem Kühler, eine Überführung der erwähnten Gasbestandteile von der Gasphase in eine Nebelphase/Kondensationsphase vorgeschlagen. Der so entstandene Nebel wird anschließend in einem Demister/Tropfenabscheider aus dem Prozessgasstrom vor der CO₂-Abscheidung ausgehalten.

Die Verwendung von Demistern und Nasselektroabscheidern wird in diesem Zusammenhang auch in der WO 2013/004731 A1 diskutiert, deren Einsatz wird jedoch dort für einen großtechnischen Prozess wie beispielsweise eine Rauchgaswäsche verworfen. Darüber hinaus sind beispielsweise Demister nur zur Aushaltung von Aerosolpartikeln in der Größenordnung von 1 bis 3 µm wirkungsvoll.

Die zuvor geschilderte Problematik sowie ähnliche Lösungen werden beispielsweise in den Druckschriften EP 2 578 297 A1, EP 2 578 298 A1, EP 2 578 295 A1 und EP 2 578 296 A1 diskutiert. Die bekannten zuvor erwähnten Maßnahmen sind grundsätzlich geeignet, die Aminemissionen zu vermindern, jedoch nicht in solchen Größenordnungen, die absolut zufriedenstellend wären.
Ein Verfahren zur Gaswäsche von aerosolhaltigen Prozessgasen unter Verwendung eines aminhaltigen Lösungsmittels als Waschmittel mit einer vorgeschalteten Rauchgasentschwefelungsanlage ist beispielsweise auch aus der US 8,486,357 B1 bekannt, auf der jeweils der Oberbegriff der unabhängigen Ansprüche beruht. In dieser Druckschrift wird ein Waschturm zur Rauchgasentschwefelung beschrieben, in dem eine Feinwäsche des Rauchgases im oberen Teil des Waschturms vorgesehen ist. Diese Feinwäsche umfasst eine Rauchgasabkühlung mit einer Kühlflüssigkeit in Form von Rauchgaskondensat. AM Kopf des Waschstroms ist ein üblicher Demister vorgesehen.
Der Erfindung liegt daher die Aufgabe zugrunde, ein Verfahren und System zur Gaswäsche von aerosolhaltigen Prozessgasen und Verwendung eines aminhaltigen Lösungsmittels als Waschmittel bereitzustellen, bei welchen die Aminemissionen signifikant reduziert sind.
Die Aufgabe wird durch ein Verfahren mit den Merkmalen des Anspruchs 1 gelöst. Vorteilhafte Ausgestaltungen ergeben sich aus den Unteransprüchen.

Die Aufgabe wird weiterhin mit einem entsprechenden System zur Gaswäsche von aerosolhaltigem Prozessgas gemäß Anspruch 5 gelöst. Der Erfindung liegt die Erkenntnis zugrunde, dass tatsächliche Ursache dafür ist, dass der Mechanismus des Waschmittelaustrags zum überwiegenden Teil auf der Emission von Aerosolpartikeln beruht, die mit Aminen und organischen Spurstoffen aus dem Waschmittel beladen sind. Allerdings hat die Anmelderin in Versuchen herausgefunden, dass entscheidend für die Emissionsminderung die Entfernung bzw. Minimierung von festen Partikeln (Aerosolpartikeln) mit einer Größe von ≤0,2 µm in dem Prozessgasstrom ist. Gerade die feinsten Aerosolpartikel führen zu einer Bildung von feinsten Nebeltröpfchen, die nicht mit herkömmlichen Tropfenabscheidern oder Nasselektroabscheidern aus dem Prozessgasstrom aufgehalten werden können.
Erfindungsgemäß wird daher vorgeschlagen, die verhältnismäßig niedrige Wasserdampfkonzentration des Prozessgases vor der Gaswäsche in der Absorberkolonne mit Wasser zu erhöhen, auf einen Sättigungsgrad von > 0,8, sodass an in dem Prozessgas enthaltenden Aerosolpartikeln Wasser aus der Gasphase kondensiert und so zu einem Anwachsen der betreffenden Aerosolpartikel führt. Diese Durchmesservergrößerung beispielsweise auf eine Größe von 1 bis 10 µm bewirkt, dass die vergrößerten Aerosolpartikel in einem anschließenden Verfahrensschritt aus dem Prozessgas aufgehalten werden können. Die Abscheidung kann erfolgen durch entsprechende Einbauten in der Gasführung oder beispielsweise auch unter Zuhilfenahme eines elektrischen Feldes.
Die Erfindung kann also dahingehend zusammengefasst werden, dass erfindungsgemäß eine Abscheidung der für die Emissionen aus dem Aminabtrennungsprozess verantwortlichen festen Partikel im Größenbereich von bis zu 0,2 µm vor dem Eintritt in den eigentlichen Aminabtrennprozess erzielt wird. Diese Abscheidung bzw. Reduzierung der festen Partikel im Größenbereich von < 0,2 µm wird durch Anwachsung und abschließende Abscheidung der betreffenden Aerosolpartikel bewirkt.
Als vorteilhaft hat sich erwiesen, die Konzentration der Aerosolpartikel mit einem Durchmesser < 0,2 µm im Prozessgas vor der Gaswäsche auf < 60.000 Partikel/cm³ einzustellen.

Die Messung der Aerosolpartikel im Prozessgas kann beispielsweise unter Verwendung einer spektrometrischen Messeinrichtung erfolgen. Eine solche Messeinrichtung wird beispielsweise von der Firma TSI Incorporated unter der Bezeichnung "Fast Mobility Particle Sizer" angeboten. Mit einer solchen Messeinrichtung lassen sich Aerosolpartikel in der Größenordnung von 5,6 bis 560 nm sowie deren Größenverteilung in Echtzeit messen. Es ist üblich, dass die Wasserdampfkonzentration des Prozessgases durch Quenchen mit Wasser oder einem wässrigen Fluid oder durch Dampfzugabe eingestellt wird. Unter "Quenchen" wird in der Technik die schnelle Abkühlung heißer Gase durch Verdunstungskühlung unter Verwendung von Gas-Flüssigkeits-Kontaktapparaten (Quenche) bezeichnet.
Erfindungsgemäß wird die Wasserdampfkonzentration des Prozessgases durch Hindurchleitung durch einen Schaum-, Dispergier- oder Blasenschichtwäscher eingestellt. Solche Gas-Flüssigkeits-Kontaktapparate sind Apparate mit Sieblochboden, oder Rohreinbauten, in denen das Gas durch eine Flüssigkeits- bzw. Schaumschicht strömt. Hierzu wird ein Fluid, welches eine niedrigere Temperatur als das Prozessgas aufweist, auf den Sieblochboden bzw. die Rohreinbauten aufgebracht und vom Prozessgas durchströmt. Die Abscheidung der Aerosolpartikel kann beispielsweise unter Verwendung von Tropfenabscheidern, Korona-Aerosolabscheidern oder Nasselektroabscheidern erfolgen.
Vorzugsweise werden die Aerosolpartikel nach Anwachsung durch Wasserdampfkondensation in einem Korona-Aerosolabscheider oder in einem Nasselektroabscheider abgeschieden.
Bei einer besonders bevorzugten und zweckmäßigen Variante des Verfahrens gemäß der Erfindung ist vorgesehen, dass dieses die Gaswäsche von Rauchgas aus einem Kraftwerk als aerosolhaltiges Prozessgas umfasst, wobei das Verfahren eine nasse Rauchgasentschwefelung sowie eine der Rauchgasentschwefelung nachgeschaltete CO₂-Abtrennung als Gaswäsche umfasst.
Die Erfindung betrifft weiterhin ein System zur Gaswäsche von aerosolhaltigen Prozessgasen, insbesondere zur mehrstufigen Gaswäsche von Rauchgasen aus einem Kraftwerksprozess oder Stahl- oder Zementherstellungsprozess, umfassend wenigstens einen Rauchgaszug vorzugsweise mit einem Elektrofilter, eine nasse Rauchgasentschwefelungsanlage, eine der Entschwefelungsanlage nachgeschaltete CO₂-Wäsche mit einer Absorberkolonne und einer Desorberkolonne, wobei das System wenigstens eine Quenche in Form wenigstens eines Schaum-, Dispergier- oder Blasenschichtwäschers umfasst, der dem Elektrofilter nachgeschaltet und der Absorberkolonne vorgeschaltet ist. Das System umfasst weiterhin wenigstens einen Aerosolpartikelabscheider, der der Quenche nachgeschaltet und der Absorberkolonne vorgeschaltet ist.

Eine nasse Rauchgasentschwefelungsanlage im Sinne der vorliegenden Erfindung umfasst eine Nasswäsche in Form einer Waschkolonne oder eines Absorberturms, in welchem Rauchgas abgekühlt, mit Wasser gesättigt und durch eine Kalksteinsuspension/Kalkmilch, die in dem Absorberturm verrieselt wird, von SO₂ befreit wird. Die hierbei entstehende Gipssuspension sammelt sich im Sumpf des Absorberturms und wird aus diesem ausgeschleust, sowie nach Abtrennung des anfallenden Gipses in Hydrozyklonen wieder zurückgeführt. Erfindungsgemäß ist vorgesehen, das Rauchgas bzw. Prozessgas vor, während oder hinter einer nassen Rauchgasentschwefelung zu quenchen und die durch das Quenchen angewaschenen Aerosolpartikel in einem Aerosolpartikelabscheider abzuscheiden.

Grundsätzlich ist es möglich, die Quenche und den Aerosolpartikelabscheider in einem Aggregat zu verwirklichen. Beispielsweise können die Quenche und/oder der Aerosolpartikelabscheider in einem Absorber oder Waschturm der Rauchgasentschwefelungsanlage angeordnet sein. Alternativ kann beispielsweise vorgesehen sein, die Quenche der Rauchgasentschwefelungsanlage vorzuschalten und den Aerosolpartikelabscheider der Rauchgasentschwefelungsanlage nachzuschalten. Insbesondere durch das Anordnen der Quenche vor der Rauchgasentschwefelungsanlage ist sichergestellt, dass das Rauchgas ein verhältnismäßig hohes Temperaturniveau besitzt, sodass der maximale Temperaturunterschied beim Quenchen genutzt werden kann. Dadurch kann ein möglichst rasches Wachstum der feinen Aerosolpartikel durch Aufkondensation von Wasser erzielt werden, wodurch gewährleistet ist, dass die so angewachsenen Aerosolpartikel beispielsweise durch elektrostatische Aerosolabscheidung aus dem Prozessgas entfernt werden können.

Bevorzugt umfasst das System gemäß der Erfindung als Aerosolpartikelabscheider wenigstens einen Nasselektroabscheider oder wenigstens einen Korona-Aerosolabscheider, der vorzugsweise der Rauchgasentschwefelungsanlage nachgeschaltet ist. Der Nasselektroabscheider umfasst ein Hochspannungsfeld mit Niederschlagselektroden und Sprühelektroden. Die noch im Gas befindlichen Partikel und Aerosole werden negativ aufgeladen und wandern im elektrischen Feld zur Niederschlagsfläche. Die Reinhaltung der Niederschlagsflächen und Sprühelektroden erfolgt gegebenenfalls mittels Spüleinrichtungen. Bei Verwendung eines Korona-Aerosolabscheiders werden die Aerosolpartikel in einem elektrischen Feld aufgeladen und an Elektroden abgeschieden.

Die Erfindung wird nachstehend anhand eines in den Zeichnungen dargestellten Ausführungsbeispiels erläutert:
Es zeigen:
- Figur 1: ein Verfahrensfließbild, welches die Rauchgasentschwefelung des Rauchgases aus einem fossil beheizten Dampferzeuger schematisch veranschaulicht und
- Figur 2: ein schematisches Verfahrensfließbild der der Rauchgasentschwefelungsanlage nachgeschalteten CO₂-Wäsche.

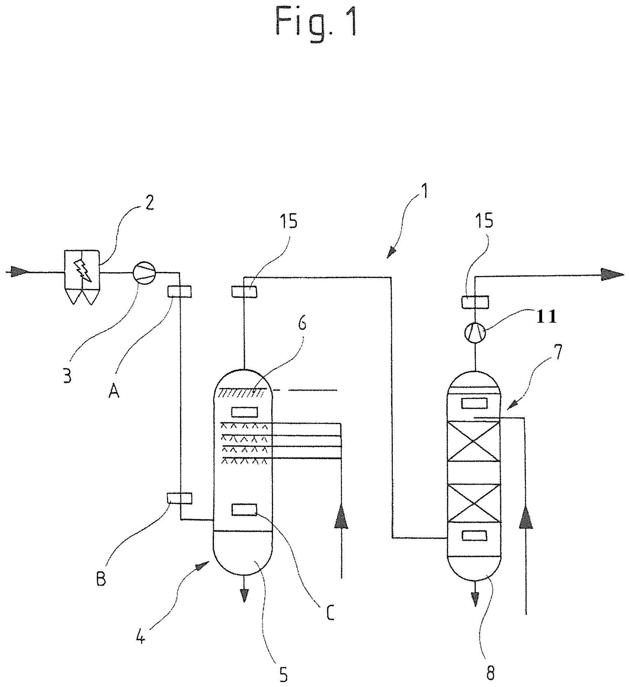

Es wird zunächst Bezug genommen auf Figur 1.

Die dort dargestellte Rauchgasentschwefelungsanlage 1 ist beispielsweise im Rauchgasweg eines kohlegefeuerten Kraftwerks (nicht dargestellt) angeordnet. Das Rohgas aus der Kohlefeuerung wird in einem Elektrofilter 2 weitestgehend von Flugstaub befreit.

Dem Elektrofilter 2 ist ein Saugzug mit einem ersten Gebläse 3 nachgeschaltet, welches die Druckverluste in dem Rauchgasweg kompensiert. Das heiße, mit Wasser ungesättigte Rauchgas wird zunächst einem Waschturm 4 (Nasswäsche) der Rauchgasentschwefelungsanlage 1 zugeführt. Je nachdem, ob eine Wärmeauskoppelung aus dem Rauchgas vor Eintritt in die Rauchgasentschwefelungsanlage 1 vorgesehen ist oder nicht, beträgt die Temperatur des Rauchgases typischerweise zwischen 105°C und 140°C.

Innerhalb des Waschturms 4 wird das Rauchgas im Gegenstrom mit einer Kalksteinsuspension (CaCO₃/Kalkmilch) geführt. Das CaCO₃ wird mit dem SO₂ des Rauchgases zu Kalziumsulfat oxidiert und wird über den Sumpf 5 des Waschturms 4 ausgetragen. Dabei erfolgt eine Abkühlung des Rauchgases auf eine Temperatur von etwa 50°C bis 65°C. Die sich im Sumpf 5 des Waschturms 4 ansammelnde Kalksuspension wird ausgeschleust und nach Abtrennung des Gipses in Hydrozyklonen dem Waschturm 4 wieder zugeführt. Am Kopf des Waschturms 4 sind Tropfenabscheider 6 vorgesehen, die mit Prozesswasser gespült werden. Je nach Kraftwerkstyp bzw. Verschaltungsvarianten erfolgt hinter dem Waschturm 4 eine Erwärmung des Rauchgases/Prozessgases.

Beispielsweise kann eine Wärmeverschiebung des Wärmeinhalts von dem Rauchgas vor Eintritt in den Waschturm 4 auf das Rauchgas nach Austritt aus dem Waschturm 4 oder zur Kesselspeisewasser- oder Verbrennungsluftvorwärmung vorgesehen sein. Eine solche Wärmeverschiebung ist nicht notwendigerweise erforderlich und deshalb aus Vereinfachungsgründen nicht dargestellt.

Dem Waschturm 4 ist eine weitere Waschkolonne 7 als Feinwäsche nachgeschaltet. In der Feinwäsche wird mittels strukturierter oder unstrukturierter Packungen mit gekühltem Umlaufwasser, beispielweise mit Rauchgaskondensat eine wässrige NaOH-Lösung im Gegenstrom mit dem Rauchgas in Kontakt gebracht, um eine weitere Abkühlung des Rauchgases zu erzielen und einen etwaigen Rest an SO₂ zu entfernen. Das Kondensat wird im Sumpf 8 der Feinwäsche gesammelt und als Umlaufwasser benutzt.

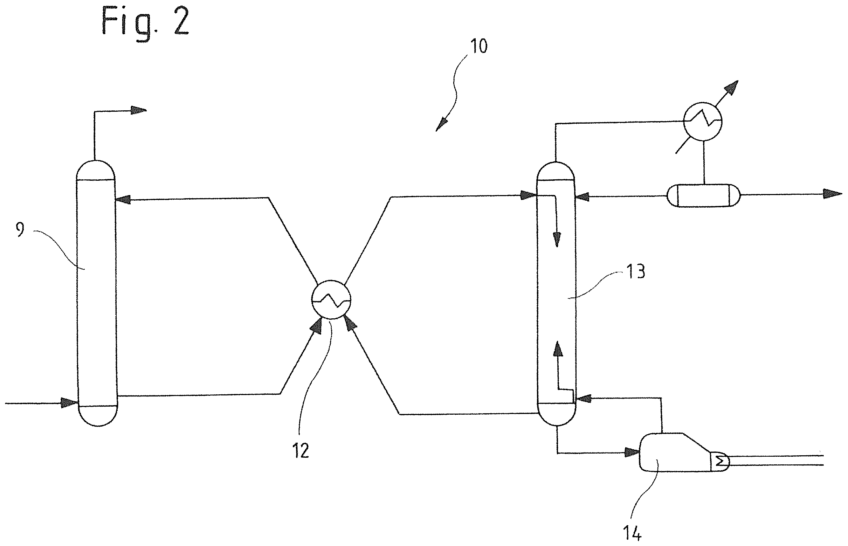

Bevor das Rauchgas in die in Figur 2 dargestellte Absorberkolonne 9 einer CO₂-Wäsche 10 eingeleitet wird, erfolgt eine leichte Druckerhöhung mittels eines zweiten Gebläses 11.

Das in dem Prozessgas bzw. Rauchgas enthaltende CO₂ wird in der Absorberkolonne 9 bei niedriger Temperatur (beispielsweise 40°C bis 60°C) mit einem wässrigen Lösungsmittel, beispielsweise einer Mischung aus Wasser mit Monoethanolamin (MEA) ausgewaschen. Nachdem das CO₂-beladene Lösungsmittel/Waschmittel über einen Kreuzstromwärmetauscher 12 vorgewärmt wurde, wird das so vorgewärmte CO₂-beladene Lösungsmittel in eine Desorberkolonne 13, die auch Stripper genannt wird, eingeleitet. Hier strömt dem flüssigen Lösungsmittel von unten nahe dem Desorbersumpf etwa 110°C bis 130°C heißer Dampf entgegen, der in einem Reboiler 14 durch Erhitzen eines Teilstroms des Lösungsmittels beispielsweise mit Hilfe von Niederdruckdampf erzeugt wird. Hier kann beispielsweise Dampf mit einem Dampfdruck von 4 bar verwendet werden, der zwischen dem Mitteldruck- und Niederdruckteil einer Dampfturbine des Kraftwerks abgezapft wurde. Am Kopf der Absorberkolonne 9 wird das gereinigte Prozessgas als Reingas ausgetragen.
Um am Kopf der Absorberkolonne 9 einen Feinnebelaustrag mit Lösungsmittel bzw. Waschmittel und somit eine Waschmittelemission bzw. Aminemission weitestgehend zu unterdrücken, ist erfindungsgemäß vorgesehen, dass Rauchgas/Prozessgas an den Stellen A, B oder C mit Wasser zu quenchen. Die Positionen A, B sind hinter dem Saugzug des Rauchgasstromes vor dem Waschturm 4 sowie vor (A) oder nach (B) einem optionalen Wärmeverschiebungssystem angeordnet, die Position C befindet sich innerhalb des Waschturms 4 und bezeichnet beispielsweise ein Aggregat, in welchem Quenchen, Aerosolpartikelabscheidung und Entschwefelung innerhalb des Aggregats erfolgen.

Eine Abscheidung der durch das Quenchen angewachsenen feinsten Aerosolpartikel erfolgt jeweils in dem Waschturm 4 und der Feinwäsche 7 nachgeschalteten Tropfenabscheidern 6, 7 oder Nasselektroabscheidern 15. Die Erfindung ist so zu verstehen, dass ggf. ein einziges Nasselektroabscheider 15 reicht, um die durch das Quenchen angewachsenen Aerosolpartikel aus dem Rauchgas aufzuhalten. Diese Aerosolpartikel sind nach Erkenntnissen der Anmelderin in erster Linie verantwortlich für den Aminnebelaustrag aus der Absorberkolonne 9.

### Bezugszeichenliste

- 1: Rauchgasentschwefelungsanlage
- 2: Elektrofilter
- 3: erstes Gebläse
- 4: Waschturm
- 5: Sumpf des Waschturms
- 6: Tropfenabscheider
- 7: Feinwäsche
- 8: Sumpf der Feinwäsche
- 9: Absorberkolonne
- 10: CO₂-Wäsche
- 11: zweites Gebläse
- 12: Kreuzstromwärmetauscher
- 13: Desorberkolonne
- 14: Reboiler
- 15: Nasselektroabscheider

## Patentansprüche

1. Verfahren zur Gaswäsche von aerosolhaltigen Prozessgasen unter Verwendung eines aminhaltigen Lösungsmittels als Waschmittel, welches in einer Absorberkolonne (9) mit dem Prozessgas in Kontakt gebracht wird und welches in einer Desorberkolonne (13) regeneriert und nach Abkühlung der Absorberkolonne (9) wieder zugeführt wird, wobei die Wasserdampfkonzentration des nicht wassergesättigten Prozessgases vor der Gaswäsche in der Absorberkolonne (9) mit Wasser erhöht wird, sodass an im Prozessgas enthaltenen Aerosolpartikeln Wasser aus der Gasphase kondensiert, und dass in einem folgenden Verfahrensschritt die so angewachsenen Aerosolpartikel vor der Gaswäsche aus dem Prozessgas ausgeschieden werden, **dadurch gekennzeichnet, dass** die Wasserdampfkonzentration des Prozessgases durch Hindurchleiten durch einen Schaum-, Dispergier- oder Blasenschichtwäscher jeweils als Gas-Flüssigkeits-Kontaktapparat mit Sieblochboden, oder Rohreinbauten, in dem das Gas durch eine Flüssigkeits-oder Schaumschicht strömt, auf einen Sättigungsgrad von > 0,8 eingestellt wird.

2. Verfahren nach Anspruch 1, **dadurch gekennzeichnet, dass** die Konzentration der Aerosolpartikel mit einem Durchmesser < 0,2 µm im Prozessgas vor der Gaswäsche auf < 60.000/cm³ Prozessgas eingestellt wird.

3. Verfahren nach einem der Ansprüche 1 bis 2, **dadurch gekennzeichnet,**
**dass** die Aerosolpartikel nach Anwachsung durch Wasserdampfkondensation in einem Korona-Aerosolabscheider oder in einem Nasselektroabscheider abgeschieden werden.

4. Verfahren nach einem der Ansprüche 1 bis 3, **dadurch gekennzeichnet,**
**dass** dieses die Gaswäsche von Rauchgasen aus einem Kraftwerk als aerosolhaltiges Prozessgas umfasst, wobei das Verfahren eine nasse Rauchgasentschwefelung sowie eine der Rauchgasentschwefelung nachgeschaltete CO₂-Abtrennung als Gaswäsche umfasst.

5. System zur Gaswäsche von aerosolhaltigen Prozessgasen, insbesondere von Rauchgasen aus einem Kraftwerksprozess oder Stahl- oder Zementherstellungsprozess, umfassend wenigstens einen Rauchgaszug, eine nasse Rauchgasentschwefelungsanlage (1), eine der Rauchgasentschwefelungsanlage (1) nachgeschaltete CO₂-Wäsche mit einer Absorberkolonne (9) und einer Desorberkolonne (13), umfassend wenigstens eine Quenche sowie wenigstens einen Aerosolpartikelabscheider, der der Quenche nachgeschaltet und der Absorberkolonne vorgeschaltet ist, **dadurch gekennzeichnet, dass** als Quenche wenigstens ein Schaum-, Dispergier- oder Blasenschichtwäscher jeweils als Gas-Flüssigkeits-Kontaktapparat mit Sieblochboden, oder Rohreinbauten, in dem das Gas durch eine Flüssigkeits-oder Schaumschicht strömt, vorgesehen ist, der hinter einem Elektrofilter eines Rauchgaszuges angeordnet ist.

6. System nach Anspruch 5, **dadurch gekennzeichnet, dass** die Quenche und der Aerosolpartikelabscheider in einem Aggregat verwirklicht sind.

7. System nach Anspruch 6, **dadurch gekennzeichnet, dass** die Quenche und/oder der Aerosolpartikelabscheider in einem Absorber oder Waschturm (4) der Rauchgasentschwefelungsanlage angeordnet sind.

8. System nach Ansprüchen 5 bis 7, **dadurch gekennzeichnet, dass** die Quenche der Rauchgasentschwefelungsanlage (1) vorgeschaltet ist.

9. System nach Ansprüchen 5 bis 8, **dadurch gekennzeichnet, dass** der Aerosolpartikelabscheider der Rauchgasentschwefelungsanlage (1) nachgeschaltet ist.

10. System nach einem der Ansprüche 5 bis 9, **dadurch gekennzeichnet, dass** als Aerosolpartikelabscheider wenigstens ein Nasselektroabscheider (15) oder ein Korona-Aerosolabscheider vorgesehen ist, der vorzugsweise der Rauchgasentschwefelungsanlage (1) nachgeschaltet ist.

## Claims

1. Method for gas scrubbing of aerosol-containing process gases, using an amine-containing solvent as scrubbing agent that is brought into contact with the process gas in an absorber column (9) and which scrubbing agent is regenerated in a desorber column (13) and, after cooling, is fed back to the absorber column (9), wherein the water vapor concentration of the non-water-saturated process gas is increased with water before the gas scrubbing in the absorber column (9), in such a manner that water from the gas phase condenses on aerosol particles present in the process gas, and that, in a following method step, the aerosol particles that have thus grown in size are precipitated from the process gas before the gas scrubbing, **characterized in that** the water vapor concentration of the process gas is adjusted to a degree of saturation of > 0.8 by passing it through a foam scrubber, dispersant scrubber, or bubble-layer scrubber in each case as a gas-liquid contact apparatus having perforated plates, or tube internals in which the gas flows through a liquid layer or foam layer.

2. Method according to Claim 1, **characterized in that** the concentration of the aerosol particles having a diameter < 0.2 µm in the process gas is adjusted before the gas scrubbing to < 60 000/cm³ of process gas.

3. Method according to either of Claims 1 and 2, **characterized in that** the aerosol particles, after increase in size by water vapor condensation, are precipitated in a corona-aerosol separator or in a wet electrostatic precipitator.

4. Method according to any one of Claims 1 to 3, **characterized in that** said method comprises the gas scrubbing of flue gases from a power plant as aerosol-containing process gas, wherein the method comprises a wet flue gas desulfurization and also a CO₂-capture downstream of the flue gas desulfurization as gas scrubbing.

5. System for gas scrubbing of aerosol-containing process gases, in particular of flue gases from a power plant process, or steel or cement production process, comprising at least one flue gas exhaust, a wet flue gas desulfurization unit (1), a CO₂ scrubber downstream of the flue gas desulfurization unit (1) having an absorber column (9) and a desorber column (13), comprising at least one quench and also at least one aerosol particle separator that is connected downstream of the quench and is connected upstream of the absorber column, **characterized in that**, as quench, at least one foam scrubber, dispersant scrubber or bubble-layer scrubber is provided, which is arranged downstream of an electrostatic precipitator of a flue gas exhaust, in each case as a gas-liquid contact apparatus having perforated plates, or tube internals, in which the gas flows through a liquid layer or foam layer.

6. System according to Claim 6, **characterized in that** the quench and the aerosol particle separator are implemented in one unit.

7. System according to Claim 6, **characterized in that** the quench and/or the aerosol particle separator are arranged in an absorber or scrubbing tower (4) of the flue gas desulfurization unit.

8. System according to Claims 5 to 7, **characterized in that** the quench is connected upstream of the flue gas desulfurization unit (1).

9. System according to Claims 5 to 8, **characterized in that** the aerosol particle separator is connected downstream of the flue gas desulfurization unit (1).

10. System according to any one of Claims 5 to 9, **characterized in that**, as aerosol particle separator, at least one wet electrostatic precipitator (15) or a corona-aerosol separator is provided, which is preferably connected downstream of the flue gas desulfurization unit (1).

## Revendications

1. Procédé d'épuration de gaz pour des gaz de processus contenant des aérosols avec utilisation d'un solvant aminé comme agent d'épuration, qui est mis en contact avec le gaz de processus dans une colonne d'absorbeur (9) et qui est régénéré dans une colonne de désorbeur (13) et de nouveau envoyé à la colonne d'absorbeur (9) après refroidissement, dans lequel on augmente avec de l'eau la concentration en vapeur d'eau du gaz de processus non saturé en eau avant l'épuration dans la colonne d'absorbeur (9), de telle manière que de l'eau se condense à partir de la phase gazeuse sur des particules d'aérosol contenues dans le gaz de processus, et que l'on précipite dans une étape de procédé suivante hors du gaz de processus avant l'épuration les particules d'aérosol ainsi accrues, **caractérisé en ce que** l'on règle à un degré de saturation > 0,8 la concentration en vapeur d'eau du gaz de processus par circulation à travers un épurateur à mousse, à dispersion ou à couche de bulles chaque fois comme appareil de contact gaz-liquide avec plateau perforé, ou accessoires tubulaires, dans lequel le gaz s'écoule à travers une couche de liquide ou de mousse.

2. Procédé selon la revendication 1, **caractérisé en ce que** l'on règle la concentration des particules d'aérosol avec un diamètre < 0,2 µm dans le gaz de processus avant l'épuration à < 60 000/cm³ de gaz de processus.

3. Procédé selon une des revendications 1 à 2, **caractérisé en ce que** l'on précipite les particules d'aérosol après croissance par condensation de vapeur d'eau dans un séparateur d'aérosol à effet corona ou dans un électro-séparateur humide.

4. Procédé selon l'une quelconque des revendications 1 à 3, **caractérisé en ce que** ce dernier comprend l'épuration de gaz de fumées provenant d'une centrale thermique en tant que gaz de processus contenant des aérosols, dans lequel le procédé comprend une désulfuration humide de gaz de fumées ainsi qu'une séparation de CO₂ en tant qu'épuration de gaz disposée en aval de la désulfuration de gaz de fumées.

5. Système d'épuration de gaz de processus contenant des aérosols, en particulier de gaz de fumées provenant d'un processus de centrale thermique ou d'un processus de production d'acier ou de ciment, comprenant au moins un conduit de gaz de fumées, une installation de désulfuration humide de gaz de fumées (1), un laveur de CO₂ disposé en aval de l'installation de désulfuration de gaz de fumées (1) avec une colonne d'absorbeur (9) et une colonne de désorbeur (13), comprenant au moins un quench, ainsi qu'au moins un séparateur de particules d'aérosol, qui est disposé en aval du quench et en amont de la colonne d'absorbeur, **caractérisé en ce qu'**il est prévu comme quench au moins un épurateur à mousse, à dispersion ou à couche de bulles chaque fois comme appareil de contact gaz-liquide avec plateau perforé, ou des accessoires tubulaires, dans lequel le gaz s'écoule à travers une couche de liquide ou de mousse, lequel est disposé après un électrofiltre d'un conduit de gaz de fumées.

6. Système selon la revendication 5, **caractérisé en ce que** le quench et/ou le séparateur de particules d'aérosol sont réalisés en un groupe.

7. Système selon la revendication 6, **caractérisé en ce que** le quench et/ou le séparateur de particules d'aérosol sont disposés dans un absorbeur ou une tour de lavage (4) de l'installation de désulfuration de gaz de fumées.

8. Système selon les revendications 5 à 7, **caractérisé en ce que** le quench est monté en amont de l'installation de désulfuration de gaz de fumées (1).

9. Système selon les revendications 5 à 8, **caractérisé en ce que** le séparateur de particules d'aérosol est disposé en aval de l'installation de désulfuration de gaz de fumées (1).

10. Système selon l'une quelconque des revendications 5 à 9, **caractérisé en ce qu'**il est prévu comme séparateur de particules d'aérosol au moins un électro-séparateur humide (15) ou un séparateur d'aérosols à effet corona, qui est disposé de préférence en aval de l'installation de désulfuration de gaz de fumées (1).
